Europäisches Patentamt

European Patent Office

Office européen des brevets

(19)

(11) **EP 0 827 068 B1**

(12) **EUROPEAN PATENT SPECIFICATION**

(45) Date of publication and mention
of the grant of the patent:
**15.10.2003 Bulletin 2003/42**

(51) Int Cl.7: **G06F 7/48**, G06F 7/02,
G06F 9/38

(21) Application number: **97114905.9**

(22) Date of filing: **28.08.1997**

(54) **Floating point number data processing means**

Datenverarbeitungsanlage für Gleitkommazahlen

Processeur de données pour des nombres à virgule flottante

(84) Designated Contracting States:
**DE DK FR GB IT**

(30) Priority: **02.09.1996 GB 9618262**

(43) Date of publication of application:
**04.03.1998 Bulletin 1998/10**

(73) Proprietor: **SIEMENS PLC**
**Bracknell, Berkshire RG12 8FZ (GB)**

(72) Inventor: **Carter, Robert**
**Dean Row, Wilmslow, Cheshire (GB)**

(74) Representative: **Humphrey-Evans, Edward John**
**c/o Siemens AG**
**P.O. Box 22 16 34**
**80506 München (DE)**

(56) References cited:
**US-A- 3 825 895**          **US-A- 4 677 610**
**US-A- 5 027 272**          **US-A- 5 081 573**

- **L. BENTAL: "A Floating Point Arithmetic Unit" ELECTRONIC ENGINEERING., vol. 34, no. 409, March 1962, pages 144-147, XP002074945 LONDON GB**
- **L. FRECON ET AL: "OP RATEURS VIRGULE-FLOTTANTE DYNAMIQUE-VARIABLE PRECISION-MULTIPLE" ELECTRONICS LETTERS., vol. 8, no. 8, 20 April 1972, pages 191-193, XP002074946 STEVENAGE GB**
- **PERKINS D M ET AL: "Teaching ASIC design with FPGAs" PROCEEDINGS OF FIFTH ANNUAL IEEE INTERNATIONAL ASIC CONFERENCE AND EXHIBIT (CAT. NO.92TH0475-4), ROCHESTER, NY, USA, 21-25 SEPT. 1992, pages 271-274, XP002074947 ISBN 0-7803-0768-2, 1992, New York, NY, USA, IEEE, USA**
- **R. GRAPPEL ET AL.: "Increase Z8000 power with floating-point routines" EDN ELECTRICAL DESIGN NEWS., vol. 25, no. 8, 20 April 1980, pages 179-185, XP002074948 NEWTON, MASSACHUSETTS US**
- **M. BONOMI: "Avoiding Coprocessor Bottlenecks" BYTE, vol. 13, no. 3, March 1988, pages 197-204, XP002095963 ST PETERBOROUGH US**
- **A. DAVIES ET AL.: "Interfacing a hardware multiplier to a general-purpose microporcessor" MICROPROCESSORS AND MICROSYSTEMS, vol. 1, no. 7, October 1977, pages 425-431, XP000212024 LONDON GB**

EP 0 827 068 B1

**Description**

The present invention relates to floating point number data processing means for use with microprocessor systems and in particular to a low precision floating point number format.

The present invention finds application in AC motor drive technology where, for example, a small motor may draw half an amp of current and a large motor may draw 200 amps of current, and the frequency range of such motors is very large.

Many known floating point systems are realised in pure software. This is a slow process, typically taking tens or hundreds of micro-seconds per operation.

Existing microcontrollers use integer arithmetic. In many control applications, the range of variables results in a scaling calculation at every calculation step in order to maintain accuracy while avoiding overflow. Floating point variables and arithmetic solve this problem.

Floating point mathematics hardware is available to the universally accepted IEEE format. The standard precision for this format requires 4 or 5 bytes storage as mentioned above. The range and accuracy of these numbers far exceeds most control requirements. The hardware to implement mathematic functions is complex and operates slowly. Several memory operations are required to load each operand into the floating point unit and the result out.

A floating point comparison, e.g. the control statement if (A < B) then, requires a full floating point subtraction and inspection of the sign of the result. This very common control function becomes rather time consuming.

An aim of the present invention is to provide means for performing operations on a floating point number format which does not suffer from the above disadvantages experienced in the prior art.

According to the present invention there is provided an apparatus according to claim 1.

In accordance with another aspect of the invention, there is provided a method according to claim 5.

An embodiment of the invention will now be described, with reference to the accompanying drawings, in which:

Figure 1 shows a block diagram of a system including a microcontroller, gate array and a flash floating point processor,
Figure 2 shows a block diagram of one implementation of a flash floating point processor,
Figure 3 shows a block diagram of an arithmetic unit, and
Figure 4 shows a table of the arithmetic unit functions.

The floating point format has a sign bit, a 7 bit signed exponent, and an 8 bit mantissa. The mantissa has an assumed 9th bit. The resultant 16 bits is a single memory location or data transfer operation in a 16 bit microcontroller. When one further requires that an unsigned integer comparison of floating point numbers should be correct, this leads to the following format: where

bit 15 is a sign bit,          1 = positive. If 0, *invert all other bits*
bit 14 is an exponent sign,     1 = positive
bits 13-8 is the exponent,      note whole exponent is 2's complement with sign bit inverted, and,
bits 7-0 is the mantissa,       note effective 9 bit mantissa. Add 256 to this number.

Examples of this format are as follows:

$$\text{FFFF is } +(255 + 256)/256 * 2^{63} = +1.841E19$$

(largest possible number);

$$\text{C000 is } +(0 + 256)/256 * 2^{0} = +1;$$

$$\text{8000 is } +(0 + 256)/256 * 2^{-64} = +5.421E-20$$

(smallest possible number);
-1 would be 3FFF
II would be

$$C192 = +(146 + 256)/256* \, 2^1 = 3.140625$$

(0.03% error).

The range of numbers which can be calculated is:

+/- $5.4 \times 10^{-20}$ to $1.84 \times 10^{19}$ with an accuracy of 0.2% All numbers and calculation results are correct to between 1/512 and 1/1024 thus giving a basic accuracy of 0.2%.

An implementation of this floating point format is performed by a range of mathematical functions in a gate array with registers mapped into the memory range of an associated microcontroller. This implements all functions combinatorially and the function is determined by register choice.

For example, to add two numbers,
write operand 1 to the floating point A accumulator,
write operand 2 to the floating point B add register, read the result from the floating point A accumulator.

These registers are memory mapped leading to very fast data throughput.

Because of the reduced accuracy, only approximately 3K gates are required to perform +-*/ functions. Additionally, floating point to integer and integer to floating point conversion functions are integrated.

To speed up multi-step calculations, if the A accumulator is not written between calculations, the previous calculation result is latched into the A accumulator so calculations are executed at the rate at which the B register can be written to. Thus, a sustainable 5 megaflop performance is achieved.

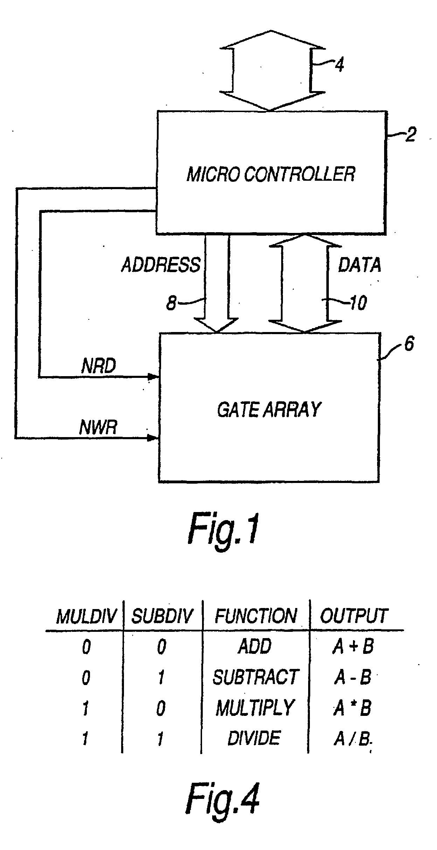

Referring to Figure 1, there is shown a microcontroller (2) having a highway connection (4) to a motor drive system. The microcontroller (2) is connected to a gate array (6) which includes a flash floating point processor. The connection to the gate array (6) is made by a four bit address highway (8) and a sixteen bit data highway (10). Two further control signals, NRD and NWR are provided by the microcontroller (2) to the gate array (6). The gate array including the flash floating point processor unit is mapped into the memory space of the microcontroller, and as this is a combinatorial system no clock connection is needed between the microcontroller and the flash floating point processor.

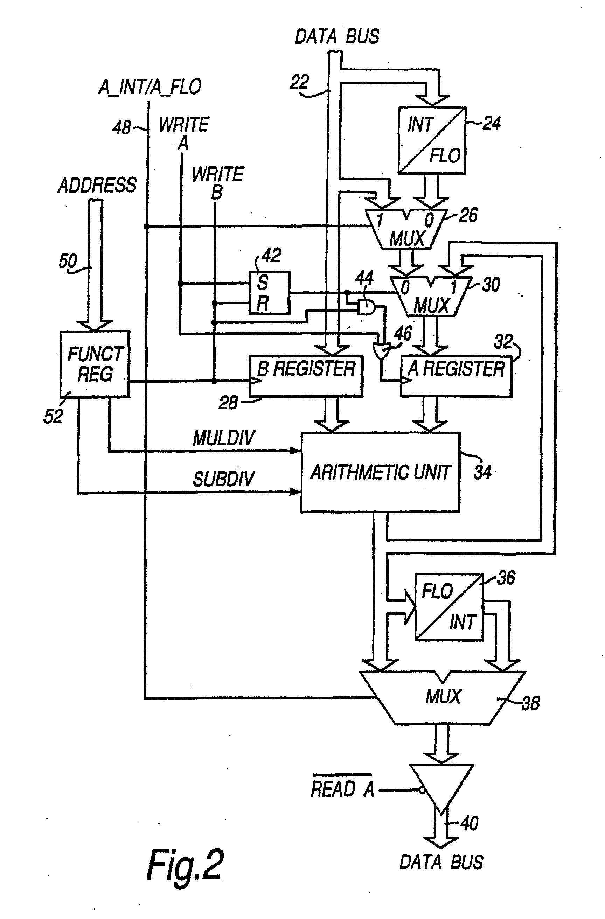

Referring to Figure 2 there is shown an implementation of a flash floating point processor. A data bus 22 is connected to a first converter 24, inputs of a first multiplexer 26 and a B register 28. The first converter 24 has its output connected to further inputs of the first multiplexer 26. The output of the first multiplexer 26 is connected to inputs of a second multiplexer 30, and the outputs thereof are connected to an A register 32. The outputs of the registers 28 and 32 are connected to an arithmetic unit, the output of which is fed back to further inputs of the second multiplexer 30. The output of the arithmetic unit 34 is also fed to a second converter 36 and to inputs of a third multiplexer 38. The output of the second converter 36 is applied to further inputs of the multiplexer 38. Output signals from the third multiplexer 38 are fed out to a data bus 40 under control of a $\overline{\text{READ A}}$ signal.

WRITE A and B signals are applied to the A and B registers 32, 28 and the second multiplexer 30 by means of associated latching and gating circuitry 42-46. An A-INT/A-FLO control signal is applied over line 48 to the first multiplexer 26 and the third multiplexer 38. Address information is passed over a highway 50 to a function register 52, which receives the WRITE B control signal and generates two output signals MULDIV, SUBDIV, which are applied to the arithmetic unit 34.

The converter 24 designated INT/FLO is a hardware converter between the 16 bit unsigned integers on highway 22 and the floating point number format multiplexer 26 which uses the address information (A-INT/A-FLO) on line 48 to determine whether to choose a floating point number from the data bus or an integer from the INT/FLO, converter 34 thus allowing unsigned integers to be written directly to the flash floating point processor.

The multiplexer 30 selects either the data bus contents or the previous floating point output to be written into the A register 32. If the B register 28 is written twice in succession, the previous floating point output is written into the A register 32 at the same time as the new operand is written into the B register 28.

The output of floating point arithmetic unit 34 does not need to be latched because its inputs are latched, and therefore the output remains stable until one of registers 28, 32 are written into. The FLO/INT converter 36 is a hardware converter positioned between the floating point number format and the 16 bit unsigned integers. This converter 36 and the arithmetic unit 34 are fully combinatorial, containing no latches, flip-flops or loop structures of any kind.

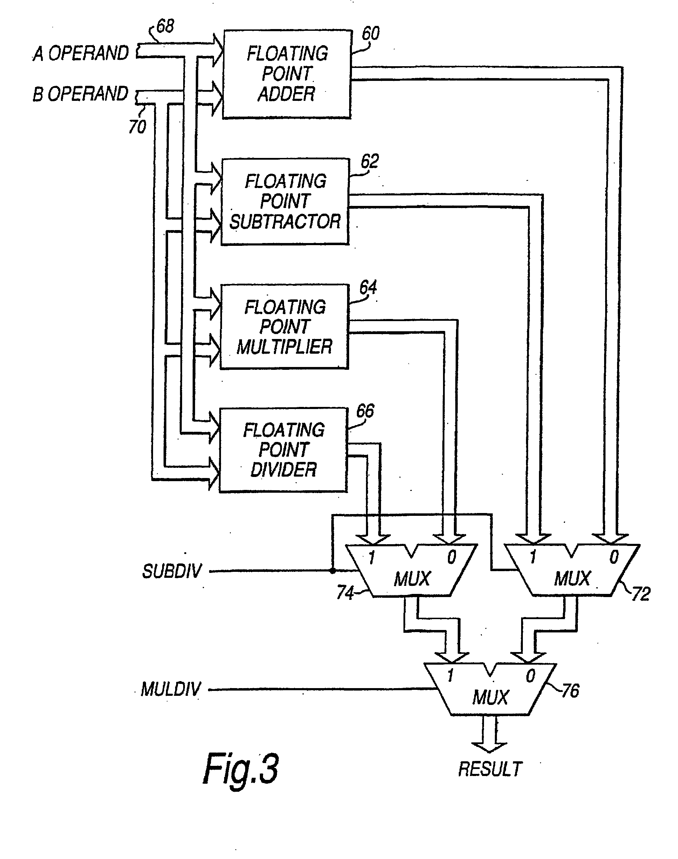

Referring to Figure 3 there is shown a block diagram of the arithmetic unit 34 in Figure 2. The arithmetic unit comprises a floating point adder 60, a floating point subtractor 62, a floating point multiplier 64 and a floating point divider 66, all of which receive respective A operand signals on highway 68 and B operand signals on highway 70. The outputs from the adder 60 and the subtractor 62 are applied to a multiplexer 72, and the outputs of the multiplier 64 and divider 66 are applied to the inputs of a multiplexer 74. The outputs of the multiplexer 72 and 74 are applied to a further multiplexer 76 which generates the output signals of the arithmetic unit. The multiplexers 72 and 74 receive the SUBDIV control signal and the multiplexer 76 receives the MULDIV control signal. These signals are shown in the table of Figure 4, and together determine the function of the arithmetic unit and the required output from the arithmetic unit.

It will be appreciated by those skilled in the art that there are other ways of implementing the present invention which fall within the scope of the following claims.

**Claims**

1.  Apparatus for performing operations with respect to numbers in a floating point format, said apparatus comprising:

    a microprocessor (2); and
    an associated floating point gate array (6) coupled in data communication (8, 10) with said microprocessor, said gate array including a floating point arithmetic unit which operates combinatorially on said numbers in a floating point format; wherein
    the floating point format comprises sixteen bits of data,

    where

    | | |
    |---|---|
    | bit 15 is a sign bit | 1= positive; If 0, *invert all other bits* |
    | bit 14 is an exponent sign | 1 = positive |
    | bits 13-8 is the exponent, | note whole exponent is 2's complement with sign bit inverted, and, |

    bits 7-0 is the mantissa; and
         when said sign bit is zero, all other bits in said sixteen bits of data are inverted, such that an unsigned integer comparison of said floating point numbers yields a correct result.

2.  Apparatus for performing operations with respect to numbers in a floating point format according to claim 1, wherein mathematical functions are performed in the gate array using registers (28, 32) which are mapped into a memory of the microprocessor system.

3.  Apparatus for performing operations with respect to numbers in a floating point format according to claim 2, wherein the mathematical functions are performed by a particular choice of registers.

4.  Apparatus for performing operations with respect to numbers in a floating point format according to claim 4 or 5 wherein, subsequent to a previous calculated result, if a first register is not written to between a first calculation and a second calculation, the first calculation is latched into the first register, so that calculations are executed at a rate at which a second register can be written to.

5.  A method of performing operations with respect to numbers in a data processor which includes a microprocessor (2) and an associated logic gate array (6), said method comprising:

    expressing said numbers in a floating point format;
    said logic gate array implementing mathematical manipulations of said numbers in said floating point format; and
    said data processor performing unsigned integer comparison of said floating point numbers; wherein
    said logic gate array operates combinatorially on said numbers according to said floating point format; and
    said floating point format comprises sixteen bits of data
    wherein said floating point format is constituted as follows:

    | | |
    |---|---|
    | bit 15 is a sign bit | 1 = positive; if 0, invert all other bits |
    | bit 14 is an exponent bit | 1 = positive |
    | bits 13-8 are an exponent | wherein whole exponent is 2's complement with sign bit inverted, and |
    | bits 7-0 are a mantissa; | add 256 to this number. |

    and is structured,

wherein, when said sign bit is zero, all other bits of said sixteen bits of data are inverted, such that said unsigned integer comparison of said numbers in said floating point format consistently yields a correct result.

**Patentansprüche**

1. Vorrichtung zum Ausführen von Operationen an Zahlen in einem Gleitkommaformat, wobei die Vorrichtung umfaßt:

   einen Mikroprozessor (2); und

   ein zugeordnetes Gleitkomma-Gatearray (6), das mit dem Mikroprozessor für eine Datenkommunikation (8, 10) gekoppelt ist, wobei das Gatearray eine Gleitkomma-Arithmetikeinheit enthält, die an den Zahlen in einem Gleitkommaformat kombinatorisch arbeitet; wobei

   das Gleitkommaformat sechzehn Datenbits umfaßt, wobei

   | | |
   |---|---|
   | Das Bit 15 ein Vorzeichenbit ist, | 1 = positiv; falls 0, werden alle anderen Bits invertiert, |
   | das Bit 14 ein Exponentenvorzeichen ist, | 1 = positiv, |
   | die Bits 13-8 der Exponent sind, | wobei der gesamte Exponent ein Zweierkomplement mit invertiertem Vorzeichenbit ist, und |
   | die Bits 7-0 die Mantisse sind, | wobei zu dieser Zahl 256 zu addieren ist; und |

   wobei dann, wenn das Vorzeichenbit null ist, alle anderen Bits in den sechzehn Datenbits invertiert werden, so daß ein vorzeichenloser Ganzzahlvergleich der Gleitkommazahlen ein richtiges Ergebnis liefert.

2. Vorrichtung zum Ausführen von Operationen an Zahlen in einem Gleitkommaformat nach Anspruch 1, bei der in dem Gatearray mathematische Funktionen unter Verwendung von Registern (28, 32) ausgeführt werden, die auf einen Speicher des Mikroprozessorsystems abgebildet werden.

3. Vorrichtung zum Ausführen von Operationen an Zahlen in einem Gleitkommaformat nach Anspruch 2, bei der die mathematischen Funktionen durch eine bestimmte Wahl der Register ausgeführt werden.

4. Vorrichtung zum Ausführen von Operationen an Zahlen in einem Gleitkommaformat nach Anspruch 4 oder 5, bei der im Anschluß an ein vorher berechnetes Ergebnis dann, wenn in ein erstes Register zwischen einer ersten Berechnung und einer zweiten Berechnung nicht geschrieben wird, die erste Berechnung in dem ersten Register zwischengespeichert wird, so daß Berechnungen mit einer Geschwindigkeit ausgeführt werden, mit der in ein zweites Register geschrieben werden kann.

5. Verfahren zum Ausführen von Operationen an Zahlen in einem Datenprozessor, der einen Mikroprozessor (2) und ein zugeordnetes logisches Gatearray (6) enthält, wobei das Verfahren umfaßt:

   Darstellen der Zahlen in einem Gleitkommaformat;

   das logische Gatearray implementiert mathematische Manipulationen an den Zahlen in dem Gleitkommaformat; und

   der Datenprozessor führt einen vorzeichenlosen Ganzzahlvergleich zwischen den Gleitkommazahlen aus; wobei

   das logische Gatearray an den Zahlen gemäß dem Gleitkommaformat kombinatorisch arbeitet; und

   das Gleitkommaformat sechzehn Datenbits umfaßt, wobei das Gleitkommaformat folgendermaßen gebildet ist:

   | | |
   |---|---|
   | das Bit 15 ein Vorzeichenbit ist, | 1 = positiv; falls 0, werden alle anderen Bits invertiert, |

das Bit 14 ein Exponentenvorzeichen ist, 1 = positiv,

die Bits 13-8 der Exponent sind, wobei der gesamte Exponent ein Zweierkomplement mit invertiertem Vorzeichenbit ist, und

die Bits 7-0 die Mantisse sind, wobei zu dieser Zahl 256 zu addieren ist;

und so strukturiert ist, daß dann, wenn das Vorzeichenbit null ist, alle anderen Bits der sechzehn Datenbits invertiert werden, so daß ein vorzeichenloser Ganzzahlvergleich der Zahlen in dem Gleitkommaformat konsistent ein richtiges Ergebnis liefert.

**Revendications**

1. Appareil pour effectuer des opérations par rapport à des nombres dans un format à virgule flottante, ledit appareil comprenant :

   un microprocesseur (2) ; et
   un réseau prédiffusé à virgule flottante associée (6) qui est couplé dans la communication des données (8, 10) audit microprocesseur, ledit réseau prédiffusé incluant une unité arithmétique à virgule flottante qui effectue des opérations combinatoires avec lesdits nombres au format à virgule flottante ; dans lequel
   le format à virgule flottante comporte seize bits de données,

   où

   le bit 15 est un bit de signe 1 = positif ; si 0, inverser tous les autres bits
   le bit 14 est un signe d'exposant 1 = positif
   les bits 13 à 8 correspondent à l'exposant, noter que l'ensemble de l'exposant est un complément à 2 avec bit de signe inversé
   les bits 7 à 0 correspondent à la mantisse ; et

   lorsque ledit bit de signe est zéro, tous les autres bits dans lesdits seize bits de données sont inversés, de sorte qu'une comparaison de nombres entiers non signés desdits nombres à virgule flottante donne un résultat correct.

2. Appareil pour effectuer des opérations par rapport à des nombres dans un format à virgule flottante selon la revendication 1, dans lequel les fonctions mathématiques sont effectuées dans le réseau prédiffusé en utilisant des registres (28, 32) qui sont mappés dans une mémoire du système de microprocesseur.

3. Appareil pour effectuer des opérations par rapport à des nombres dans un format à virgule flottante selon la revendication 2, dans lequel les fonctions mathématiques sont effectuées par un choix particulier de registres.

4. Appareil pour effectuer des opérations par rapport à des nombres dans un format à virgule flottante selon la revendication 2 ou 3, dans lequel, suite à un précédent résultat calculé, si rien n'est écrit sur un premier registre entre un premier calcul et un deuxième calcul, le premier calcul est verrouillé dans le premier registre, de sorte que les calculs soient exécutés à une vitesse permettant d'écrire sur un deuxième registre.

5. Procédé pour effectuer des opérations par rapport à des nombres dans un processeur de données qui inclut un microprocesseur (2) et un réseau prédiffusé logique associé (6), ledit procédé comprenant :

   expression desdits nombres dans un format à virgule flottante ;
   ledit réseau prédiffusé logique mettant en oeuvre des manipulations mathématiques desdits nombres dans ledit format à virgule flottante ; et
   ledit processeur de données effectuant une comparaison de nombres entiers non signés avec lesdits nombres à virgule flottante ; dans lequel
   ledit réseau prédiffusé logique fonctionne de manière combinatoire sur lesdits nombres conformément au dit format à virgule flottante ; et
   ledit format à virgule flottante comprend seize bits de données étant constitué comme suit :

le bit 15 est un bit de signe 1 = positif ; si 0, inverser tous les autres bits
le bit 14 est un bit exposant 1 = positif
les bits 13 à 8 correspondent à un exposant dans lequel l'ensemble de l'exposant est un complément à 2 avec bit de signe inversé, et
les bits 7 à 0 correspondent à une mantisse, ajouter 256 à ce nombre ;

dans lequel, lorsque ledit bit de signe est zéro, tous les autres bits desdits seize bits de données sont inversés ;

et ledit format à virgule flottante est structuré de telle sorte que ladite comparaison de nombres entiers non signés avec lesdits nombres au dit format à virgule flottante donne constamment un résultat correct.

**Fig.1**

| MULDIV | SUBDIV | FUNCTION | OUTPUT |
|--------|--------|----------|--------|
| 0 | 0 | ADD | A + B |
| 0 | 1 | SUBTRACT | A - B |
| 1 | 0 | MULTIPLY | A * B |
| 1 | 1 | DIVIDE | A / B. |

**Fig.4**

*Fig.2*

Fig.3